# EUROPÄISCHE PATENTSCHRIFT

(11) **EP 1 211 122 B1**
(45) Veröffentlichungstag und Bekanntmachung des Hinweises auf die Patenterteilung: **22.12.2010**
(21) Anmeldenummer: 01890299.9
(22) Anmeldetag: 24.10.2001
(51) Int. Cl.: B60M 1/28

(54) **Maschine und Verfahren zum Verlegen eines Fahrdrahtes**
Installation machine and method for a catenary line
Machine et méthode d'installation d'une ligne caténaire

(30) Priorität: 01.12.2000 AT 8822000
(43) Veröffentlichungstag der Anmeldung: 05.06.2002
(73) Patentinhaber: Franz Plasser Bahnbaumaschinen-Industriegesellschaft m.b.H., 1010 Wien (AT)
(72) Erfinder: Theurer, Josef, 1010 Wien (AT); Gruber, Leopold, 3270 Scheibbs (AT)

(56) Entgegenhaltungen:
- SU-A- 958 161
- US-A- 6 007 050

## Beschreibung

Die Erfindung betrifft eine Maschine zum Verlegen eines Fahrdrahtes und/oder eines Tragseiles einer Oberleitung eines Gleises , mit einem auf Schienenfahrwerken abgestützten Maschinenrahmen, auf dem eine - aufgewickelten Fahrdraht beinhaltende - Drahttrommel und eine durch einen Antrieb in Maschinenquerrichtung verschwenkbare Führungsvorrichtung mit einer über einen Höhenverstellantrieb höhenverstellbaren bzw. vom Maschinenrahmen distanzierbaren Führungsrolle zur Führung des von der Drahttrommel abgewickelten Fahrdrahtes in die Montageposition gelagert sind.

(Siehe US-A-6 007 050).

Gemäß US 5,114,119 ist bereits eine derartige Maschine bekannt, mit der ein Fahrdraht und ein Tragseil einer elektrischen Oberleitung eines Gleises gemeinsam und mit der endgültigen Zugspannung verlegt werden können. Fahrdraht und Tragseil werden dabei kontinuierlich von jeweils einer eigenen Drahttrommel abgezogen und durchlaufen eine Friktionswinde als Zugspannungsvorrichtung, bevor sie anhand einer Führungsvorrichtung in der korrekten Höhen- und Seitenlage für die Endmontage positioniert werden. Die Zugspannungsvorrichtung besteht im wesentlichen aus zwei Seilrollen mit Seilrillen und quer zur Maschinenlängsrichtung verlaufenden, horizontalen Rotationsachsen, wobei die Seilrollen in Maschinenlängsrichtung unmittelbar hintereinander auf einem wippenartig aufgehängten Tragrahmen angeordnet und über einen Kettenantrieb miteinander verbunden sind. Die Verlegespannung entsteht durch die Vorfahrt der Maschine bei hydraulisch abgebremsten Seilrollen und wird - auch bei Stillstand der Maschine - automatisch auf einen gewünschten Wert gehalten. Der von der Speichertrommel abgewickelte Draht umläuft dabei die beiden Seilrollen der Zugspannungsvorrichtung in einer Doppelschleife, wobei beide Seilrollen jeweils zwei nebeneinanderliegende Seilrillen aufweisen.

Durch EP 0580604 B1 ist eine weitere Maschine zur Montage einer Oberleitung bekannt, wobei der Fahrdraht bzw. das Tragseil jeweils durch eine eigene Führungsvorrichtung in Montagehöhe hochgeführt werden.

Die Aufgabe der vorliegenden Erfindung besteht in der Schaffung einer gattungsgemäßen Maschine bzw. eines Verfahrens, mit der bzw. dem vorzugsweise unter Aufrechterhaltung der vorschriftsmäßigen Zugspannung der Fahrdraht bei konstruktiv einfacher Lösung zur Beendigung einer Fahrdrahtsektion mit einem Fahrleitungsmasten verbindbar ist.

Diese Aufgabe wird erfindungsgemäß mit einer Maschine der eingangs beschriebenen Art dadurch gelöst, daß eine durch einen Antrieb in bezug auf die Führungsvorrichtung unabhängig in Maschinenquerrichtung verschwenkbare, zur Übernahme des Fahrdrahtes von der Führungsvorrichtung vorgesehene Drahtübernahmevorrichtung mit einer am oberen, vom Maschinenrahmen distanzierten Ende befestigten Drahterfassungseinheit vorgesehen ist, die mit einem Höhenverstellantrieb für eine im Vergleich zur Führungsrolle der Führungsvorrichtung größere Distanzierung vom Maschinenrahmen ausgestattet ist.

Mit einer derartigen Ausbildung ist der besondere Vorteil erzielbar, daß die Drahtübernahmevorrichtung unter Beschränkung ihres Funktionsbereiches lediglich auf eine entsprechend weite Verlagerung des Fahrdrahtes in Maschinenquerrichtung konstruktiv vereinfacht ausgebildet werden kann. Insbesondere kann durch die vereinfachte Konstruktion das Problem sehr hoher Krafteinwirkungen in der maximalen Schwenkstellung besser gelöst werden. Ein weiterer Vorteil ist auch darin zu sehen, daß durch die Anordnung einer Drahtübernahmevorrichtung die für einen Großteil der Montagearbeiten zuständige Führungsvorrichtung lediglich für die in diesem Arbeitsbereich wesentlich reduziert einwirkenden Kräfte dimensioniert werden muß.

Das erfindungsgemäße Verfahren zur Montage eines Fahrdrahtes bzw. Tragseiles einer elektrischen Oberleitung eines Gleises ist dadurch gekennzeichnet, daß der Fahrdraht vor dessen Verbindung mit einem an einem Fahrleitungsmasten befestigten Radspannwerk von der Führungsvorrichtung auf eine unabhängig verschwenk- und höhenverstellbare Drahtübernahmevorrichtung zur Verschwenkung des Fahrdrahtes in Richtung zum Fahrleitungsmasten übergeben wird.

Diese Übergabe des Fahrdrahtes kann sehr einfach unter uneingeschränkter Aufrechterhaltung der gewünschten bzw. vorschriftsmäßigen Zugspannung des Fahrdrahtes durchgeführt werden, wobei der manipulative Aufwand minimal ist. Außerdem können parallel zu den Arbeiten für die Verbindung des Fahrdrahtes mit dem Fahrleitungsmasten bereits Vorbereitungsarbeiten zum Beginn einer neuen Fahrdrahtsektion durchgeführt werden.

Im folgenden wird die Erfindung an Hand in der Zeichnung dargestellter Ausführungsbeispiele näher beschrieben.

Es zeigen:
Fig.1 und 2 eine Maschine zum Verlegen eines Fahrdrahtes in Seitenansicht bzw. Draufsicht,
Fig.3 eine vereinfachte Ansicht der Maschine in Gleislängsrichtung,
Fig.4 eine verkleinerte und vereinfachte Draufsicht auf die Maschine gemäß Fig.3, und
Fig.5 bis 9 Details weiterer Varianten der Erfindung.

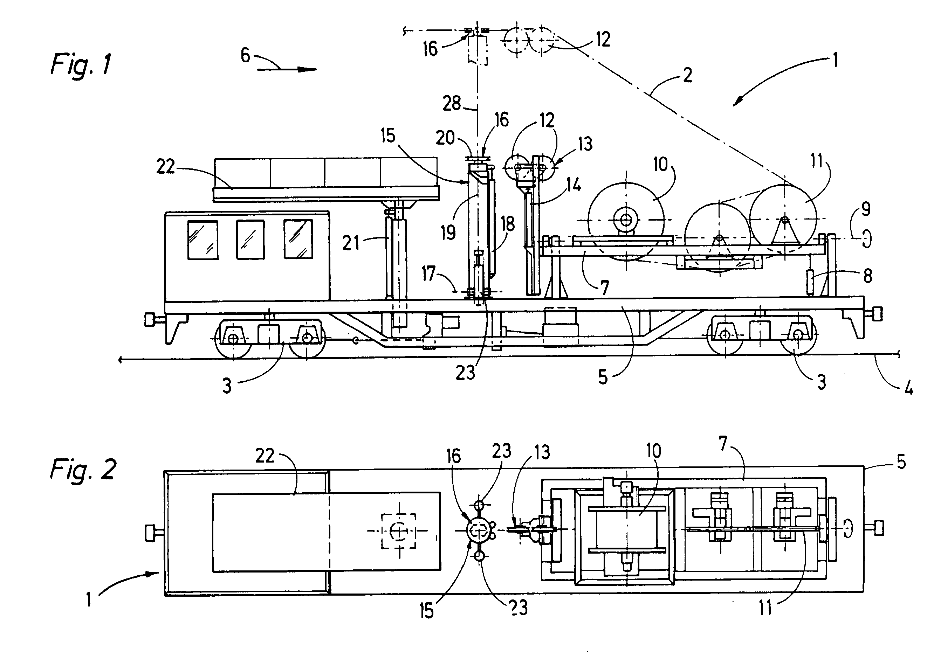

Eine in Fig.1 bis 4 ersichtliche Maschine 1 zum Verlegen eines Fahrdrahtes 2 weist einen über Schienenfahrwerke 3 auf einem Gleis 4 verfahrbaren Maschinenrahmen 5 auf. Auf der - bezüglich der durch einen Pfeil 6 dargestellten Arbeitsrichtung - vorderen Hälfte des Maschinenrahmens 5 befindet sich eine mit diesem verbundene Wippe 7, die durch einen Antrieb 8 um eine in Maschinenlängsrichtung verlaufende Achse 9 verschwenkbar ist. Auf dieser Wippe ist eine aufgewickelten Fahrdraht 2 beinhaltende Drahttrommel 10 sowie eine hydraulisch beaufschlagbare Friktionswinde 11 gelagert.

An der Wippe 7 ist eine Führungsrollen 12 aufweisende Führungsvorrichtung 13 befestigt, die durch einen Höhenverstellantrieb 14 teleskopisch höhenverstellbar ist.

Bezüglich der Arbeitsrichtung (Pfeil 6) unmittelbar hinter der Führungsvorrichtung 13 befindet sich eine Drahtübernahmevorrichtung 15, die an ihrem vom Maschinenrahmen 5 distanzierten Ende mit einer Drahterfassungseinheit 16 verbunden ist. Die Drahtübernahmevorrichtung 15 ist um eine in Maschinenlängsrichtung verlaufende Schwenkachse 17 verschwenkbar am Maschinenrahmen 5 gelagert und durch einen Höhenverstellantrieb 18 teleskopisch in einer normal zur Schwenkachse 17 verlaufenden Längsrichtung 19 verlängerbar.

Die am oberen, freien Ende der Drahtübernahmevorrichtung 15 vorgesehene Drahterfassungseinheit 16 ist als Doppelspurkranzrolle 20 mit einer normal zur Schwenkachse 17 bzw. in Längsrichtung 19 verlaufenden Drehachse 28 ausgebildet. Die bezüglich der Maschinenlängsrichtung zwischen der Führungsvorrichtung 13 und einer durch einen Antrieb 21 höhenverstellbaren Arbeitsbühne 22 am Maschinenrahmen 5 angeordnete Drahtübernahmevorrichtung 15 ist durch Schwenkantriebe 23 in Maschinenquerrichtung verschwenkbar.

Im folgenden wird die Funktionsweise der erfindungsgemäßen Maschine an Hand der Fig.1 bis 4 näher beschrieben.

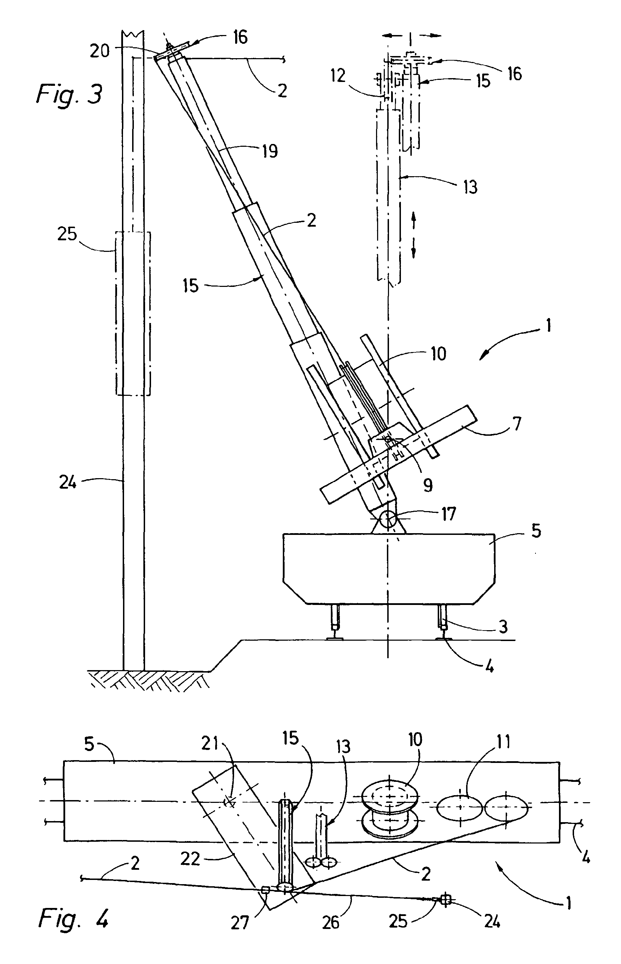

Zur Überführung des Fahrdrahtes 2 in die Montageposition, in der der Fahrdraht 2 mit nicht näher dargestellten Auslegern einer elektrischen Oberleitung verbunden wird, werden die Führungsrollen 12 der Führungsvorrichtung 13 in die Montagehöhe angehoben (siehe strichpunktierte Linien in Fig.1 und 3). Durch Verschwenken der Wippe 7 mitsamt der Führungsvorrichtung 13 wird der vorschriftsmäßige zick-zackförmige Verlauf des Fahrdrahtes 2 erreicht. Während dieser Montage erfolgt eine kontinuierliche Vorfahrt der Maschine 1 in der durch den Pfeil 6 dargestellten Arbeitsrichtung.

Zur Beendigung einer Fahrdrahtsektion muß der Fahrdraht 2 mit einem an einem Fahrleitungsmasten 24 befestigten Radspannwerk 25 verbunden werden. Zu diesem Zweck erfolgt eine Übergabe des Fahrdrahtes 2 von der Führungsvorrichtung 13 bzw. deren Führungsrollen 12 auf die Drahterfassungseinheit 16 der Drahtübernahmevorrichtung 15. Diese Übergabe erfolgt zweckmäßigerweise etwa über Gleismitte (siehe Fig.3), wobei die Drahterfassungseinheit 16 durch Beaufschlagung des Höhenverstellantriebes 18 in Montageposition hochgehoben wird. Sobald die Doppelspurkranzrolle 20 den Fahrdraht 2 kontaktiert, können die Führungsrollen 12 der Führungsvorrichtung 13 in eine Außerbetriebstellung abgesenkt werden. Anschließend erfolgt unter Beaufschlagung der Schwenkantriebe 23 ein seitliches Verschwenken der Drahtübernahmevorrichtung 15 in Maschinenquerrichtung (siehe Fig.4), um den von der Führungsvorrichtung 13 übernommenen Fahrdraht 2 in eine Fluchtlinie zu bringen, die einerseits durch den Fahrleitungsmasten 24 und andererseits durch die letzte Fixierung des Fahrdrahtes 2 mit einem nicht näher dargestellten Ausleger der elektrischen Oberleitung gebildet wird (Fig.4).

Während dieser Querverschwenkung der Drahtübernahmevorrichtung 15 erfolgt zweckmäßigerweise auch eine Verschwenkung der Wippe 7 mitsamt der Drahttrommel 10 und der Friktionswinde 11, um damit eine bestmögliche und schonende Abwicklung des Fahrdrahtes 2 zu erzielen. Dabei wird naturgemäß auch die mit der Wippe 7 verbundene Führungsvorrichtung 13 mitbewegt, die sich allerdings in einer Außerbetriebstellung befindet. Sobald der Fahrdraht 2 durch die seitliche Verschwenkung die genannte Fluchtlinie erreicht hat (3,2 Meter von Gleismitte), wird durch eine auf der Arbeitsbühne 22 befindliche Arbeitskraft ein bereits mit dem Radspannwerk 25 verbundener Hilfsdraht 26 durch eine Klemmverbindung 27 mit dem Fahrdraht 2 verbunden. Danach erfolgt eine Abtrennung des Fahrdrahtes 2 im zwischen Friktionswinde 11 und Drahterfassungseinheit 16 gelegenen Abschnitt. Damit ist die Fahrdrahtsektion ordnungsgemäß beendet. Die Drahtübernahmevorrichtung 15 sowie die Arbeitsbühne 22 werden in eine Außerbetriebstellung (siehe Fig.1 und 2) zurückverschwenkt.

Besondere Montagevorteile sind dann erzielbar, wenn der Fahrdraht 2 bereits unter vorschriftsmäßiger Zugspannung (bis zu 20 Kilonewton) verlegt wird. Durch die erfindungsgemäße Übergabe des Fahrdrahtes 2 von der Führungsvorrichtung 13 auf die Drahtübernahmevorrichtung 15 kann diese vorschriftsmäßige Zugspannung verlustfrei bis zur abschließenden Verbindung mit dem Radspannwerk 25 aufrechterhalten werden.

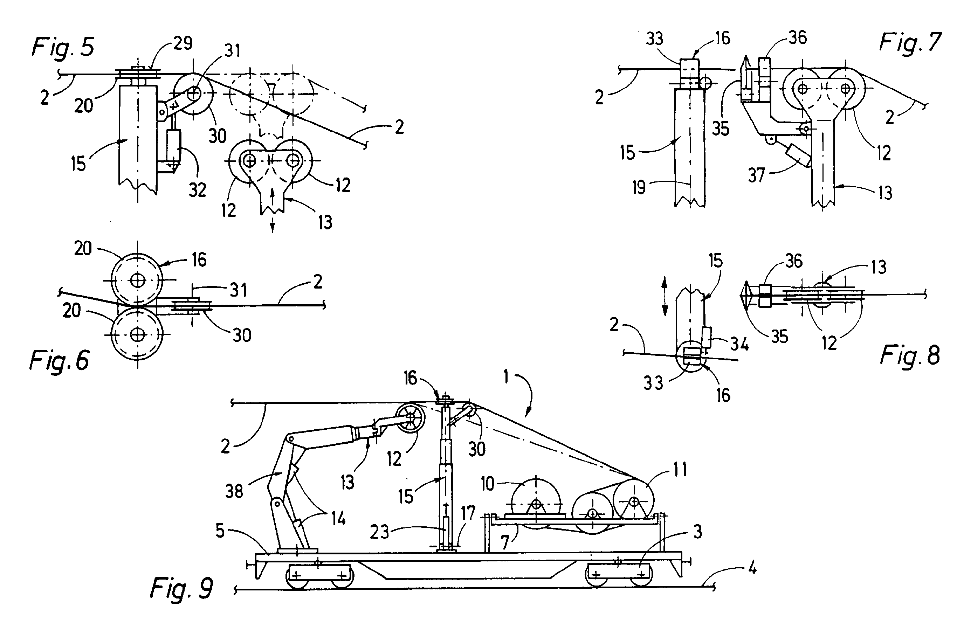

In Fig.5 und 6 ist eine Variante der Drahterfassungseinheit 16 dargestellt, bei der zwei in einer gemeinsamen Rotationsebene 29 beidseits des Fahrdrahtes 2 positionierte Doppelspurkranzrollen 20 vorgesehen sind. Zweckmäßigerweise sind beide Doppelspurkranzrollen 20 durch einen nicht näher dargestellten Antrieb geringfügig in Rotationsebene voneinander distanzierbar, so daß die Übernahme des Fahrdrahtes 2 von der Führungsvorrichtung 13 bzw. den Führungsrollen 12 einfacher durchführbar ist. Der Drahterfassungseinheit 16 ist eine zwischen dieser und der benachbarten Führungsvorrichtung 13 angeordnete Umlenkrolle 30 mit einer parallel zur Rotationsebene 29 der Doppelspurkranzrollen 20 verlaufenden Rotationsachse 31 zugeordnet. Diese Umlenkrolle 30 ist zur Vereinfachung der Übernahme des Fahrdrahtes 2 durch einen Antrieb 32 höhenverstellbar ausgebildet.

Die in den Fig.7 und 8 dargestellte Variante der Erfindung zeigt eine als Klemmzange 33 ausgebildete Drahterfassungseinheit 16. Die Klemmwirkung der Klemmzange 33 ist durch einen Antrieb 34 erzielbar. Der Führungsvorrichtung 13 ist eine Trennzange 35 zum Durchtrennen des Fahrdrahtes 2 sowie eine Klemmzange 36 zum Festhalten des abgetrennten Fahrdrahtes 2 zugeordnet. Diese beiden Zangen 35,36 sind mit Hilfe eines Antriebes 37 höhenverstellbar ausgebildet.

Wie in Fig.8 ersichtlich, wird der Fahrdraht 2 nach Festklemmen durch die Klemmzange 33 und nach Abtrennen durch die Trennzange 35 in Richtung zum Fahrleitungsmasten verschwenkt. Zweckmäßigerweise ist dabei die Klemmzange 33 um die Längsrichtung 19 der Drahtübernahmevorrichtung 15 verschwenkbar.

In der Ausführung gemäß Fig.9 ist die Führungsvorrichtung 13 für den Fahrdraht 2 als durch Antriebe 14 höhenverstell- und verschwenkbarer Kranausleger 38 ausgebildet.

## Patentansprüche

1. Maschine zum Verlegen eines Fahrdrahtes (2) und/oder eines Tragseiles einer Oberleitung eines Gleises (4), mit einem auf Schienenfahrwerken (3) abgestützten Maschinenrahmen (5), auf dem eine - aufgewickelten Fahrdraht (2) beinhaltende - Drahttrommel (10) und eine durch einen Antrieb (8) in Maschinenquerrichtung verschwenkbare Führungsvorrichtung (13) mit einer über einen Höhenverstellantrieb (14) höhenverstellbaren bzw. vom Maschinenrahmen (5) distanzierbaren Führungsrolle (12) zur Führung des von der Drahttrommel (10) abgewickelten Fahrdrahtes (2) in die Montageposition gelagert sind, **dadurch gekennzeichnet, daß** eine durch einen Antrieb (23) in bezug auf die Führungsvorrichtung (13) unabhängig in Maschinenquerrichtung verschwenkbare, zur Übernahme des Fahrdrahtes (2) von der Führungsvorrichtung (13) vorgesehene Drahtübernahmevorrichtung (15) mit einer am oberen, vom Maschinenrahmen (5) distanzierten Ende befestigten Drahterfassungseinheit (16) vorgesehen ist, die mit einem Höhenverstellantrieb (18) für eine im Vergleich zur Führungsrolle (12) der Führungsvorrichtung (13) größere Distanzierung vom Maschinenrahmen (5) ausgestattet ist.

2. Maschine nach Anspruch 1, **dadurch gekennzeichnet, daß** die Drahterfassungseinheit (16) als Doppelspurkranzrolle (20) mit einer normal zur Schwenkachse (17) verlaufenden Drehachse (28) ausgebildet ist.

3. Maschine nach Anspruch 1 oder 2, **dadurch gekennzeichnet, daß** als Drahterfassungseinheit (16) zwei in einer gemeinsamen Rotationsebene (29) beidseits des Fahrdrahtes positionierte Doppelspurkranzrollen (20) vorgesehen sind.

4. Maschine nach einem der Ansprüche 1 bis 3, **dadurch gekennzeichnet, daß** der Drahterfassungseinheit (16) eine zwischen dieser und der Führungsvorrichtung (13) angeordnete Umlenkrolle (30) mit einer parallel zur Rotationsebene (29) der Doppelspurkranzrolle (20) verlaufenden Rotationsachse (31) zugeordnet ist.

5. Maschine nach Anspruch 1, **dadurch gekennzeichnet, daß** als Drahterfassungseinheit (16) eine durch einen Antrieb (34) beaufschlagbare Klemmzange (33) vorgesehen ist.

6. Maschine nach Anspruch 5, **dadurch gekennzeichnet, daß** zwischen der Führungsvorrichtung (13) und der Drahtübernahmevorrichtung (15) eine Trennzange (35) zum Durchtrennen des Fahrdrahtes (2) vorgesehen ist.

7. Maschine nach einem der Ansprüche 1 bis 6, **dadurch gekennzeichnet, daß** die Drahtübernahmevorrichtung (15) um eine in Maschinenlängsrichtung verlaufende Schwenkachse (17) verschwenkbar am Maschinenrahmen (5) gelagert und als teleskopisch in einer normal zur Schwenkachse (17) verlaufenden Längsrichtung (19) verlängerbar ausgebildet ist.

8. Maschine nach einem der Ansprüche 1 bis 7, **dadurch gekennzeichnet, daß** die Drahtübernahmevorrichtung (15) bezüglich der Maschinenlängsrichtung zwischen der Führungsvorrichtung (13) und einer durch einen Antrieb (21) höhenverstell- und normal zur Maschinenlängsrichtung verschwenkbaren Arbeitsbühne (22) am Maschinenrahmen (5) angeordnet ist.

9. Verfahren zur Montage eines Fahrdrahtes bzw. Tragseiles (2) einer elektrischen Oberleitung eines Gleises, wobei der Fahrdraht (2) von einer Drahttrommel (10) abgewickelt und mit Hilfe einer auf einer höhenverstell- und verschwenkbaren Führungsvorrichtung (13) befestigten Führungsrolle (12) in eine Montageposition hochgeführt wird, **dadurch gekennzeichnet, daß** der Fahrdraht (2) vor dessen Verbindung mit einem an einem Fahrleitungsmasten (24) befestigten Radspannwerk (25) von der Führungsvorrichtung (13) auf eine unabhängig verschwenk- und höhenverstellbare Drahtübernahmevorrichtung (15) zur Verschwenkung des Fahrdrahtes (2) in Richtung zum Fahrleitungsmasten (24) übergeben wird.

## Claims

1. A machine for installing a contact wire (2) and/or a carrying cable of an overhead line of a track (4), comprising a machine frame (5), supported on on-track undercarriages (3), on which are mounted a wire drum (10) - containing rolled-up contact wire (2) - and a guiding device (13) which is pivotable in the transverse direction of the machine by means of a drive (8) and has a guide roller (12) for guiding the contact wire (2) unrolled from the wire drum (10) into the installation position, the guide roller (12) being designed for vertical adjustment or distancing from the machine frame (5) by means of a vertical adjustment drive (14), **characterized in that** a wire receiving device (15) is provided which is independently pivotable in the transverse direction of the machine with respect to the guiding device (13) by means of a drive (23) and provided for receiving the contact wire (2) from the guiding device (13) and has a wire engaging unit (16) fastened to the upper end distanced from the machine frame (5), the wire engaging unit (16) being equipped with a vertical adjustment drive (18) for being distanced from the machine frame (5) farther than the guide roller (12) of the guiding device (13).

2. A machine according to claim 1, **characterized in that** the wire engaging unit (16) is designed as a double-flanged roller (20) having an axis of rotation (28) extending perpendicularly the pivot axis (17).

3. A machine according to claim 1 or 2, **characterized in that** the wire engaging unit (16) is provided in the shape of two double-flanged rollers (20) positioned at either side of the contact wire in a common plane of rotation (29).

4. A machine according to one of claims 1 to 3, **characterized in that** a deflection roller (30), arranged between the wire engaging unit (16) and the guiding device (13) and having an axis of rotation (31) extending parallel to the plane of rotation (29) of the double-flanged roller (20), is associated with the wire engaging unit (16).

5. A machine according to claim 1, **characterized in that** the wire engaging unit (16) is provided in the shape of clamping pliers (33) actuatable by a drive (34).

6. A machine according to claim 5, **characterized in that** cutting pliers (35) for cutting the contact wire (2) are provided between the guiding device (13) and the wire receiving device (15).

7. A machine according to one of claims 1 to 6, **characterized in that** the wire receiving device (15) is mounted on the machine frame (5) for pivoting about a pivot axis (17) extending in the longitudinal direction of the machine and is designed to be telescopically elongatable in a longitudinal direction (19) extending perpendicularly to the pivot axis (17).

8. A machine according to one of claims 1 to 7, **characterized in that** the wire receiving device (15) is arranged on the machine frame (5) - with respect to the longitudinal direction of the machine - between the guiding device (13) and a work platform (22) which is vertically adjustable by means of a drive (21) and pivotable perpendicularly to the longitudinal direction of the machine.

9. A method of installing a contact wire or carrying cable (2) of an electrical overhead line of a track, wherein the contact wire (2) is unrolled from a wire drum (10) and guided upwards into an installation position with the aid of a guide roller (12) fastened to a vertically adjustable and pivotable guiding device (13), **characterized in that** the contact wire (2), before being connected to a wheel anchoring terminal (25) fastened to a catenary mast (24), is delivered from the guiding device (13) to an independently pivotable and vertically adjustable wire receiving device (15) for pivoting the contact wire (2) in the direction towards the catenary mast (24).

## Revendications

1. Machine pour la pose d'un fil de contact (2) et/ou d'un câble porteur d'une caténaire d'une voie ferrée (4), comprenant un châssis de machine (5) supporté sur des mécanismes de roulement ferroviaires (3) sur lequel un tambour de fil (10) contenant du fil de contact enroulé (2) et un dispositif de guidage (13) pivotant grâce à un entraînement (8) dans la direction transversale de la machine avec un rouleau de guidage (12) réglable en hauteur par le biais d'un entraînement de réglage en hauteur (14) ou pouvant être écarté du châssis de machine (5) pour le guidage du fil de contact (2) déroulé du tambour de fil (10) sont logés dans la position de montage, **caractérisée en ce qu'**un dispositif de transfert de fil (15) pivotant grâce à un entraînement (23) indépendamment par rapport au dispositif de guidage (13) dans la direction transversale de la machine, prévu pour le transfert du fil de contact (2) du dispositif de guidage (13) est pourvu d'un module de saisie de fil (16) fixé sur l'extrémité supérieure, écartée du châssis de machine (5), qui est équipé d'un entraînement de réglage en hauteur (18) pour un écartement du châssis de machine (5) supérieur par rapport au rouleau de guidage (12) du dispositif de guidage (13).

2. Machine selon la revendication 1, **caractérisée en ce que** le module de saisie de fil (16) est réalisé en tant que rouleau à boudin double (20) avec un axe de rotation (28) s'étendant perpendiculairement à l'axe de pivotement (17).

3. Machine selon la revendication 1 ou 2, **caractérisée en ce que** deux rouleaux à boudin double (20) positionnés dans un plan de rotation commun (29) des deux côtés du fil de contact sont prévus en tant que module de saisie de fil (16).

4. Machine selon l'une quelconque des revendications 1 à 3, **caractérisée en ce qu'**une poulie de renvoi (30) disposée entre le module de saisie de fil (16) et le dispositif de guidage (13) avec un axe de rotation (31) s'étendant parallèlement au plan de rotation (29) du rouleau à boudin double (20) est associée au module de saisie de fil (16).

5. Machine selon la revendication 1, **caractérisée en ce qu'**une pince étau (33) pouvant être sollicitée par un entraînement (34) est prévue en tant que module de saisie de fil (16).

6. Machine selon la revendication 5, **caractérisée en ce qu'**une pince de coupure (35) est prévue entre le dispositif de guidage (13) et le dispositif de transfert de fil (15) pour sectionner le fil de contact (2).

7. Machine selon l'une quelconque des revendications 1 à 6, **caractérisée en ce que** le dispositif de transfert de fil (15) est logé à pivotement autour d'un axe de pivotement (17) s'étendant dans la direction longitudinale de la machine sur le châssis de machine (5) et est réalisé de manière à pouvoir être rallongé par voie télescopique dans une direction longitudinale (19) s'étendant perpendiculairement à l'axe de pivotement (17).

8. Machine selon l'une quelconque des revendications 1 à 7, **caractérisée en ce que** le dispositif de transfert de fil (15) est disposé sur le châssis de machine (5) par rapport à la direction longitudinale de la machine entre le dispositif de guidage (13) et une plateforme de travail (22) réglable en hauteur grâce à un entraînement (21) et pivotante perpendiculairement à la direction longitudinale de la machine.

9. Procédé pour le montage d'un fil de contact ou d'un câble porteur (2) d'une caténaire électrique d'une voie ferrée, dans lequel le fil de contact (2) est déroulé d'un tambour de fil (10) et monté dans une position de montage à l'aide d'un rouleau de guidage (12) fixé sur un dispositif de guidage (13) réglable en hauteur et pivotant, **caractérisé en ce que** le fil de contact (2) est transféré avant sa connexion à un tendeur à roue (25) fixé à un poteau caténaire (24) du dispositif de guidage (13) sur un dispositif de transfert de fil (15) pivotant et réglable en hauteur indépendamment pour faire pivoter le fil de contact (2) dans la direction du poteau caténaire (24).
